# EUROPÄISCHE PATENTSCHRIFT

(11) **EP 0 515 421 B1**
(45) Veröffentlichungstag und Bekanntmachung des Hinweises auf die Patenterteilung: **26.04.1995**
(21) Anmeldenummer: 91903372.0
(22) Anmeldetag: 06.02.1991
(51) Int. Cl.: H02M 3/335

(54) **SCHALTNETZTEIL**
COMBINATORIAL CIRCUIT COMPONENT
PARTIE DE RESEAU COMBINATOIRE

(30) Priorität: 15.02.1990 DE 4004707
(43) Veröffentlichungstag der Anmeldung: 02.12.1992
(73) Patentinhaber: DEUTSCHE THOMSON-BRANDT GMBH, 78048 Villingen-Schwenningen (DE)
(72) Erfinder: RILLY, Gérard, D-7731 Unterkirnach (DE); RODRIGUEZ-DURAN, José, D-7730 VS-Villingen (DE); KHA, Kim-Ly, F-25170 Recologue (FR)
(86) Internationale Anmeldenummer: EP9100227
(87) Internationale Veröffentlichungsnummer: WO9112649

(56) Entgegenhaltungen:
- EP-A- 0 336 725
- US-A- 3 564 393
- PATENT ABSTRACTS OF JAPAN, vol. 5, n : 78 (E-58) (750) 22 May 1981, & JP, A, 56 25376 (NIPPON DENSHIN DENWA KOSHA) 11 March 1981

## Beschreibung

Die Erfindung geht aus von einem Schaltnetzteil gemäß dem Oberbegriff des Anspruchs 1. Ein derartiges Schaltnetzteil ist bekannt durch die EP 0 336 725 A2.

Bei einem derartigen Schaltnetzteil wird durch eine Regelung der Einschaltdauer des Schalttransistors auf der Primärseite die Höhe der auf der Sekundärseite erzeugten Betriebsspannungen stabilisiert. Dazu ist es erforderlich, eine Regelinformation über die jeweilige Höhe der Betriebsspannung von der Sekundärseite auf die Primärseite zu übertragen. Bei dieser Übertragung muß jedoch die galvanische Trennung zwischen der Primärseite und der Sekundärseite aufrechterhalten bleiben. Es ist daher bekannt, für die Übertragung der Regelinformation von der Sekundärseite auf die Primärseite zusätzliche Schaltungsmittel wie z.B. einen getrennten Übertrager oder einen Optokoppler vorzusehen.

Der Erfindung liegt die Aufgabe zugrunde, auf schaltungstechnisch einfache Weise und ohne zusätzliche Schaltungsmittel eine Übertragung der Regelinformation von der Sekundärseite auf die Primärseite unter Einhaltung der galvanischen Trennung zu bewerkstelligen.

Diese Aufgabe wird durch die im Anspruch 1 angegebene Erfindung gelöst. Vorteilhafte Weiterbildungen der Erfindung sind in den Unteransprüchen angegeben.

Bei der Erfindung wird der ohnehin für die galvanische Trennung benötigte Transformator, der an sich Leistung von der Primärseite auf die Sekundärseite überträgt, zusätzlich dazu ausgenutzt, eine Regelinformation von der Sekundärseite auf die Primärseite zu übertragen. Die Übertragung der Information erfolgt während der sogenannten Ruhephase des Transformators, während der der Strom durch die Primärwicklung mit dem Leistungsschalter abgeschaltet ist. Die gleichzeitig mit der Information übertragene oder in den Transformator rückgelieferte Energie wird dabei relativ gering gehalten. Die Regelspannung auf der Primärseite kann aus einem Spannungsanteil gewonnen werden, der von der jeweiligen Größe des Rückladestromes und damit von der Höhe der auf der Sekundärseite erzeugten Betriebsspannungen abhängig ist. Vorzugsweise wird die Spannung auf der Primärseite während der Ruhezeit mit einem Zeitfenster ausgewertet. Die Regelspannung wird dann nur aus dem Spannungsanteil dieses Zeitfensters gewonnen. Es ist ebenso möglich, die Regelspannung aus der Steilheit oder der Amplitude einer Impulsflanke abzuleiten, die ebenfalls von dem Rückladestrom und von der auf der Sekundärseite erzeugten Betriebsspannung abhängig ist. Für die Informationsübertragung ist keine zusätzliche Wicklung am Transformator erforderlich. Für die Informationsübertragung kann eine Sekundärwicklung verwendet werden, die gleichzeitig zur Erzeugung einer Betriebsspannung mittels einer Gleichrichterschaltung dient. Diese Sekundärwicklung liefert dann während der Arbeitsphase Energie in die Gleichrichterschaltung und überträgt während der Ruhephase eine Information für die Regelung auf die Primärseite. Die Energieübertragung und die Informationsübertragung erfolgen also über die selben Wicklungen, jedoch zeitlich versetzt und in entgegengesetzte Richtungen.

Es wird also erreicht, daß ein definierter Anteil der Impulsspannung am Transformator ein Maß für die Regelgröße ist. Für die Auswertung dieses Impulsteiles zur Gewinnung der Regelgröße gibt es indessen verschiedene Möglichkeiten.

Bei einer ersten Lösung wird die Impulsspannung am Transformator mit einem Schaltimpuls während eines Zeitfensters aufgetastet. Der Schaltimpuls kommt von einem das Schaltnetzteil steuernden Prozessor. Der Prozessor beinhaltet die Information, zu welcher Zeit während der Arbeitsperiode der die Regelinformation beinhaltende Spannungsanteil liegt. Dieser Spannungsanteil wird dann durch ein Zeitfenster aufgetastet und zur Gewinnung der Regelspannung gleichgerichtet. Bei einer zweiten Lösung wird der Tastimpuls aus der Impulsspannung selbst gewonnen. Mit Differenziergliedern werden die einzelnen Impulsflanken ausgewertet. Es kann dann ein Impuls gewonnen werden, der den Beginn des Zeitfensters markiert. Aus diesem Impuls kann dann in einem Impulsformer der gewünschte, sich über die Dauer des Zeitfensters erstreckende Tastimpuls erzeugt werden.

Verschiedene Ausführungsbeispiele für die genannten Lösungen werden im folgenden anhand der Zeichnung erläutert. Darin zeigen
- Fig. 1: das Schaltnetzteil in vereinfachter Form mit der ersten Lösung,
- Fig. 2: ein Schaltungsbeispiel gemäß der zweiten Lösung und
- Fig. 3: den Verlauf von Spannungen und Strömen in den Figuren 1 und 2.

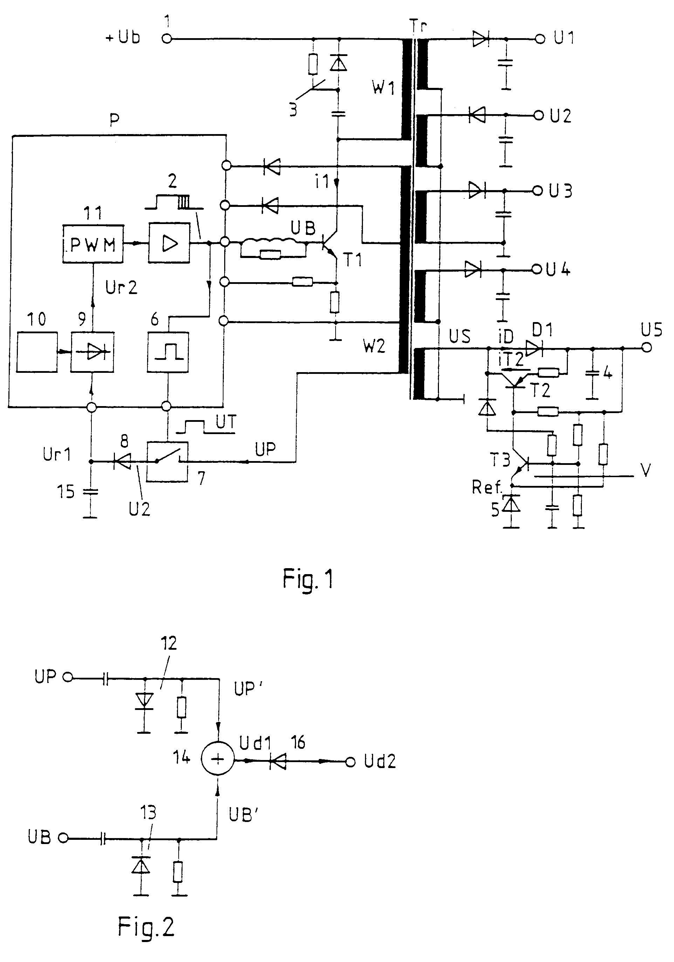

In Fig. 1 steht an der Klemme 1 eine positive Betriebsspannung +Ub, die durch Gleichrichtung der Netzwechselspannung gewonnen ist. Ub ist über die Primärwicklung W1 des Transformators Tr an den als Schalter arbeitenden Leistungstransistor T1 angeschlossen. Der Transistor T1 wird von dem Prozessor P mit einer in der Impulsweite modulierten Spannung 2 gesteuert. Über mehrere Sekundärwicklungen und angeschlossene Gleichrichter werden Betriebsspannungen U1, U2, U3, U4, U5 erzeugt. Parallel zur Primärwicklung W1 liegt ein auch als "snubber" bezeichnetes RCD-Dämpfungsglied 3, das zur Begrenzung von Impulsspitzen und der Flankensteilheit der Spannung an T1 dient.

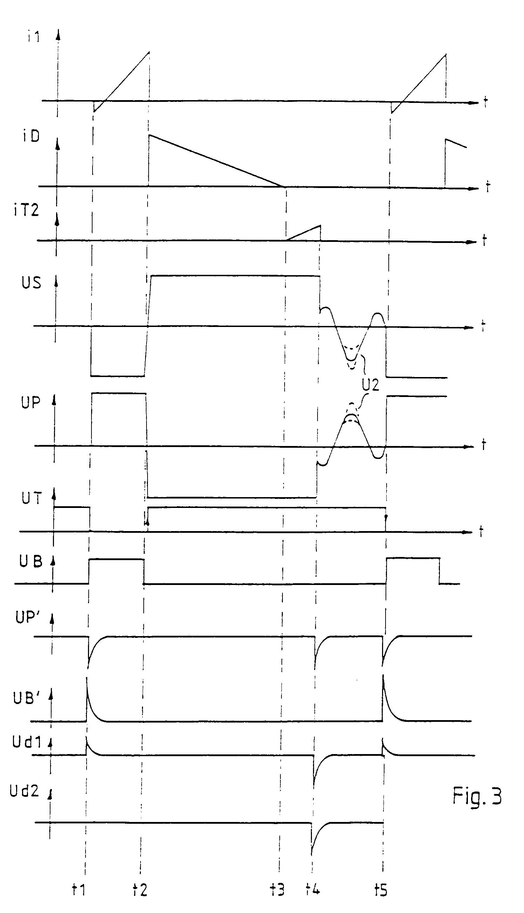

Parallel zu der Diode D1, die die Betriebsspannung U5 erzeugt, liegt der zu D1 entgegengesetzt gepolte Transistor T2, der an seiner Basis von der Vergleichsschaltung V gesteuert wird. Die Wirkung wird zusammen mit Fig. 3 erläutert. Von t1 - t2 fließt der Strom i1 durch die Primärwicklung W1 und den Transistor T1. Von t2 - t3 fließt der Strom iD durch die Diode D1 zur Aufladung des Ladekondensators 4. Im Zeitpunkt t3 wird der Transistor T2 leitend und liefert einen sogenannten Rückladestrom iT2 vom Ladekondensator 4 in den Transformator Tr zurück. Die dabei übertragene Energie ist relativ gering. Im Zeitpunkt t4 wird der Transistor T2 abgeschaltet. Durch den Rückladestrom iT2 entsteht in der Impulsspannung US die Spannung U2 von t4 - t5. Die Amplitude von U2 ist von iT2 abhängig. In der Vergleichsschaltung V wird die Betriebsspannung U5 mit der konstanten Referenzspannung Ref. an der Zenerdiode 5 verglichen. In Abhängigkeit von diesem Vergleich wird der Transistor T2 mehr oder weniger leitend gesteuert, so daß auch iT2 und U2 von U5 abhängig sind.

Die somit eine Regelinformation beinhaltende Spannung U2 erscheint auch in der zu US gegenphasigen Spannung UP an der Primärwicklung W2. In dem Prozessor P wird aus der Spannung UB, die den Transistor T1 periodisch leitend steuert und sperrt, in dem Impulsformer 6 der Tastimpuls UT gewonnen. Der Tastimpuls UT betätigt den Schalter 7 im Sinne eines Zeitfensters, so daß aus UP nur der Anteil U2 ausgewertet wird. Aus der zeitselektiv aufgetasteten Spannung U2 wird mit dem Gleichrichter 8 am Kondensator 15 die Regelspannung Url gewonnen, die somit ein Maß für die jeweilige Abweichung von U5 vom Sollwert ist. Ur1 wird in der Vergleichsstufe 9 mit einer Referenzspannung von der Spannungsquelle 10 verglichen. Die dadurch gewonnene Regelspannung Ur2 steuert den Pulsweiten-Modulator 11 derart, daß die Impulsweite der Spannung 2 im Sinne einer Stabilisierung der Betriebsspannungen U1 - U5 geregelt wird. Das Kriterium für die Regelspannung Ur2 ist also die Amplitude eines Spannungsanteils von US oder UP während des Zeitfensters t4 - t5. Das Zeitfenster t4 - t5 beträgt etwa 10 - 20 % der Einschaltdauer des Transistors T1.Der Tastimpuls UT muß sich über den Zeitraum t4 - t5 erstrecken. Er ist gemäß Fig. 3 länger ausgebildet, nämlich von t2 - t5, weil sich dieser Impuls besser aus der Schaltung ableiten läßt. Es wird dann zwar auch der Anteil aus UP von t2 - t4 mit dem Schalter 7 durchgeschaltet. Dieser negative Anteil wird jedoch durch die Wirkung der Diode 8 unterdrückt, so daß letztlich nur die Spannung U2 von t4 -t5 über die Diode 8 zur Bildung von Ur1 weitergeleitet wird. Die Schaltung hat noch folgenden Vorteil: Im allgemeinen wird parallel zum Ladekondensator 4 noch ein Ableitwiderstand benötigt, der auch als "Bleeder" bezeichnet wird und einen Entladeweg für den Kondensator dargestellt. Bei der Schaltung gemäß Fig. 1 kann dieser Ableitwiderstand hochohmiger ausgebildet sein, so daß an ihm eine geringerer Leistung abfällt. Der Ableitwiderstand kann je nach Anforderungen durch die Wirkung des Transistors T2 auch völlig entfallen.

Fig. 2 zeigt eine andere Möglichkeit zur Erzeugung des Tastimpulses UT. Aus der Spannung UP wird mit dem Differenzierglied 12 die Spannung UP′ gewonnen. Mit dem Differenzierglied 13 wird aus der Spannung UB an der Basis von T1 die Spannung UB′ gewonnen. UP′ und UB′ werden in der Addierstufe 14 addiert, wodurch die Spannung Ud1 entsteht. Die negativen Impulse UP′ bei t1 und, t5 und die positiv gerichteten Impulse UB′ bei t1 und t5 werden addiert und heben einander teilweise auf, während die negative Spannung in UP′ bei t4 bestehenbleibt. Mit der Diode 16 wird aus der Spannung Ud1 die Spannung Ud2 gewonnen, die nur eine negative Spitze im Zeitpunkt t4 aufweist. Diese Spannung Ud2 kann in einem Impulsformer oder in einer monostabilen Schaltung zur Erzeugung des Taktimpulses UT für das Zeitfenster von t4 - t5 verwendet werden.

## Patentansprüche

1. Schaltnetzteil mit einem Transformator (Tr) mit einer Sekundärwicklung, die über eine Diode (D1) einen Ladestrom (iD) an einen eine Betriebsspannung (U5) führenden Ladekondensator (4) liefert, wobei primärseitig eine von der sekundärseitigen Betriebsspannung (U5) abhängige Regelspannung (Ur) zur Steuerung der Einschaltdauer eines Schalttransistors (T1) gewonnen wird, und parallel zu der Diode (D1) ein Transistor (T2) liegt, der nach Abklingen des Ladestroms (iD) in Abhängigkeit von der Betriebsspannung (U5) während eines Bruchteils der Einschaltdauer des Schalttransistors (T1) leitend gesteuert wird und durch einen entgegengesetzt zum Ladestrom (iD) fließenden Rückladestrom (iT2) Energie von dem Ladekondensator (4) in den Transformator (Tr) zurückführt, **dadurch gekennzeichnet,** daß auf der Primärseite die Regelspannung (Ur) aus der durch den Rückladestrom (iT2) induzierten Spannung (U2) gewonnen wird.

2. Netzteil nach Anspruch 1, **dadurch gekennzeichnet**, daß der Transistor (T2) von einer Vergleichsschaltung (V) gesteuert ist, in der die Betriebsspannung (U5) mit einer Referenzspannung (Ref.) verglichen wird.

3. Netzteil nach Anspruch 1, **dadurch gekennzeichnet**, daß eine Primärwicklung (W2) über einen Schalter (7), der während eines Zeitfensters (t4 - t5) durch einen Schaltimpuls (UT) betätigt ist, an einen die Regelspannung (Ur1) liefernden Gleichrichter (8) angeschlossen ist.

4. Netzteil nach Anspruch 2, **dadurch gekennzeichnet**, daß der Schaltimpuls (UT) von einem das Schaltnetzteil steuernden Prozessor (P) abgeleitet ist und eine definierte zeitliche Lage innerhalb der Arbeitsperiode hat.

5. Netzteil nach Anspruch 2, **dadurch gekennzeichnet,** daß der Schaltimpuls (UT) aus einer Impulsflanke der Spannung an der Primärwicklung oder einer Sekundärwicklung des Transformators (Tr) abgeleitet ist (Fig. 2).

6. Netzteil nach Anspruch 1, **dadurch gekennzeichnet**, daß der Bruchteil etwa 10 - 20 % beträgt.

## Claims

1. A switch mode power supply with a transformer (Tr) with a secondary winding which supplies, via a diode (D1), a charging current (iD) to a charging capacitor (4) at which an operating voltage (U5) is present, in which at the primary side a control voltage (Ur) dependent upon the operating voltage (U5) at the secondary side is obtained for controlling the duty cycle of a switching transistor (T1), and parallel to the diode (D1) there lies a transistor (T2) which after the decay of the charging current (iD) is controlled to be conducting in dependence upon the operating voltage (U5) during a fraction of the duty cycle of the switching transistor (T1) and which feeds, through a reverse charging current (iT2) flowing in reverse direction with respect to the charging capacitor (4) back into the transformer (Tr), characterised in that on the primary side the control voltage (Ur) is obtained from the voltage (U2) induced by the reverse charging current (iT2).

2. A power supply according to claim 1, characterised in that the transistor (T2) is controlled by a comparator circuit (V) in which the operating voltage (U5) is compared with a reference voltage (Ref.)

3. A power supply according to claim 1, characterised in that a primary winding (W2) is connected via a switch (7), which is actuated by a switching pulse (UT) during a time window (t4 - t5), to a rectifier (8) supplying the control voltage (Ur1).

4. A power supply according to claim 2, characterised in that the switching pulse (UT) is derived from a processor (P) controlling the switch mode power supply and has a defined temporal position within the operating period.

5. A power supply according to claim 2, characterised in that the switching pulse (UT) is derived from a pulse edge of the voltage at the primary winding or a secondary winding of the transformer (Tr) (Fig. 2).

6. A power supply according to claim 1, characterised in that the fraction amounts to approximately 10 - 20 per cent.

## Revendications

1. Alimentation à découpage avec un transformateur (Tr) muni d'un enroulement secondaire qui délivre un courant de charge (iD) sur un condensateur (4) de régulation d'une tension de service (U5) au travers d'une diode (D1), dans laquelle une tension de régulation (Ur) dépendant de la tension de service secondaire (U5) est obtenue côté primaire pour la commande de la durée d'enclenchement d'un transistor de commutation (T1), et où un transistor (T2) est monté en parallèle avec la diode (D1), lequel est mis en conduction après la décharge du courant de charge (iD) en fonction de la tension de service (U5) pendant une fraction de la durée d'enclenchement du transistor de commutation (T1) et retourne l'énergie du condensateur de lissage (4) vers le transformateur (Tr) grâce à un courant de décharge (iT2) s'écoulant en sens inverse par rapport au courant de charge (iD), caractérisée par le fait que la tension de régulation (Ur) est obtenue côté primaire à partir de la tension (U2) induite par le courant de décharge (IT2).

2. Alimentation conforme à la revendication 1, caractérisée par le fait que le transistor (T2) est commandé par un circuit comparateur (V) dans lequel la tension de service (U5) est comparée avec une tension de référence (Ref.).

3. Alimentation conforme à la revendication 1, caractérisée par le fait qu'un enroulement primaire (W2) est raccordé à un pont redresseur (8) délivrant la tension de régulation (Ur1) par un commutateur (7), lequel est actionné par une impulsion de commutation (UT) pendant un créneau temporel (t4 à t5).

4. Alimentation conforme à la revendication 2, caractérisée par le fait que l'impulsion de commutation (UT) est délivrée par un microprocesseur (P) commandant l'alimentation à découpage et a une position définie dans le temps à l'intérieur de la période de travail.

5. Alimentation conforme à la revendication 2, caractérisée par le fait que l'impulsion de commutation (UT) est dérivée d'un flanc d'impulsion de la tension de l'enroulement primaire ou d'un enroulement secondaire du transformateur (Tr) (figure 2).

6. Alimentation conforme à la revendication 1, caractérisée par le fait que la fraction est d'environ 10 à 20 %.
